# EUROPEAN PATENT SPECIFICATION

(11) **EP 3 746 991 B1**
(45) Date of publication and mention of the grant of the patent: **15.11.2023**
(21) Application number: 19702661.0
(22) Date of filing: 22.01.2019
(51) Int. Cl.: B60L 53/14, G07F 15/00, B60L 53/65, B60L 53/66

(54) **AUTHORIZED USE OF ELECTRICITY**
AUTORISIERTE NUTZUNG VON ELEKTRIZITÄT
UTILISATION D'ÉLECTRICITÉ AUTORISÉE

(30) Priority: 31.01.2018 FI 20185087
(43) Date of publication of application: 09.12.2020
(73) Proprietor: Cation Oy, 15140 Lahti (FI)
(72) Inventor: KOPONEN, Katja, 33960 Pirkkala (FI)
(74) Representative: Kolster Oy Ab
(86) International application number: PCT/FI2019/050045
(87) International publication number: WO 2019/149992

(56) References cited:
- EP-A2- 3 133 572
- WO-A1-2013/132449
- DE-A1-102012 020 641
- US-A1- 2009 174 365
- US-A1- 2017 169 648

## Description

### TECHNICAL FIELD

The invention relates to an apparatus, a server device, and a system for authorized use only for electricity from an electric socket.

### TECHNICAL BACKGROUND

Vehicles using electricity fully of partly as a power source increases bringing the need to grow the network for recharging facilities. The amount of parking places, for example, per square kilometer built for recharging electric vehicles is too small for all the users that could use electric vehicle and would recharge their vehicle quite regularly. Thus, the availability of the parking places for recharging the electric vehicle is not great enough.

US2009174365 A1 describes a system for network-controlled charging of electric vehicles comprising charge transfer devices comprising each an electric socket for receiving an electric plug, an electric power line connecting the socket to a local power grid, a control device on the electric power line for switching the socket on and off and communication means for communicating with electric vehicle operators via wireless communication links and with a server via a wide area network.

### BRIEF DESCRIPTION

An object of the present invention is to provide a novel and improved apparatus for use in recharging electric vehicles. Further object is to provide a novel and improved server device for communicating with the apparatus. Further object is to provide a novel and improved system for recharging electric vehicles.

The objects of the invention are achieved by the apparatus and the system which are characterized by what is stated in the independent claims. The preferred embodiments of the invention are disclosed in the dependent claims.

The invention is based on the idea of an apparatus having an electric socket for receiving an electric plug and coupling means for selectively connecting the electric socket to another socket that can be connected to mains and communication means for communicating with a first user apparatus and with a server. The apparatus further comprises a control unit that is configured to detect whether the electric plug is plugged to the electric socket, receive at least user authentication data from the first user apparatus through the communication means, cause transmission of the at least user authentication data to the server, receive at least control information from the server as a response to the transmission of the at least user authentication data to the server and control, based on the control information, the coupling means to selectively couple the electric socket to the other socket.

Thus, if an inhabitant has an electric socket available next to a parking place, he/she could install the apparatus to the electric socket and authorize users to recharge their electric vehicles using the electric socket residing in the apparatus. As one realizes, the authorized usage of the electricity of the electric socket may be used in any other purpose and without the parking place, as well, since people have a vast number of devices that use electricity and/or need electricity or recharging time to time and not always an available electric socket to use as authorized.

An advantage of the apparatus, the server device and the system of the invention is that, if one has an electric socket and, maybe next to it, a parking place vacant for hours per day, per week, per month, per year or any other time regular or irregular he/she may authorize the use of the electric socket when he/she does not need it by himself/herself.

According to an embodiment, the first user apparatus is a credit card, any other identity card or tag adapted to wirelessly authenticate the user.

According to an embodiment, the second user apparatus is any mobile device.

According to an embodiment, the apparatus further comprises detecting means for detecting whether a vehicle is parked into the parking place and the control unit is further configured to cause transmitting the parking place status information to the server.

According to an embodiment, the detecting means for detecting whether a vehicle is parked into the parking place further comprises means for reading an identity information regarding the vehicle parked and the control unit is configured to upon positive result of the detecting means to detect the identity information of the vehicle parked, regard the receive the detected identity information as the step of "receive at least user authentication data from the first user apparatus through the communication means".

According to the invention, a positive verification from another user apparatus is requested regarding control the coupling means to couple the electric socket to the mains.

According to an embodiment, the second user apparatus is any mobile device or portable electronic device.

According to an embodiment, the control unit of the server is further configured to: check one or more user-related thresholds; upon receiving positive results for the checking of the availability time of the apparatus and the checking of the one or more user-related thresholds, cause transmission of control information to couple the electric socket to the mains.

According to an embodiment, the control unit is further configured to: upon exceeding the availability time of the apparatus or exceeding at least one of the one or more user-related thresholds, cause transmission a control information to decouple the electric socket from the mains.

According to an aspect there is provided a system comprising at least one apparatus according to any one of claims 1-8 and at least one server.

According to an embodiment the system comprises two or more apparatuses according to any one of claims 1-8 and at least two of the two or more apparatuses according to any one of claims 1-8 comprise a common control unit.

According to an embodiment the common control unit further comprises: receiving means for receiving current electricity usage limit value to the electric sockets of the apparatuses under control; measuring means for measuring the current overall electricity usage of the electric sockets of the apparatuses; limiting means for limiting the overall electricity usage of the electric sockets of the apparatuses; and the common control unit is configured to: compare the overall electricity usage with the current electricity usage limit value; and upon receiving a result where the overall current usage of the electric sockets of the apparatuses is above a predetermined percentage of the current electricity usage limit value, limit the usage of the electricity of the one or more electric sockets of the apparatuses.

### BRIEF DESCRIPTION OF THE DRAWINGS

In the following the invention will be described in greater detail by means of preferred embodiments with reference to the attached drawings, in which
Figure 1 is a schematic view of an apparatus according to an embodiment;
Figure 2 is a schematic view of a European type electric socket;
Figure 3 is a schematic view of a system with two apparatuses and a server according to an embodiment;
Figure 4 depicts method steps carried out in the apparatus as a block diagram according to an embodiment;
Figure 5 depicts method steps carried out in the server as a block diagram according to an embodiment;
Figure 6 is a schematic view of functional elements in the apparatus and in the server.

### DETAILED DESCRIPTION OF THE INVENTION

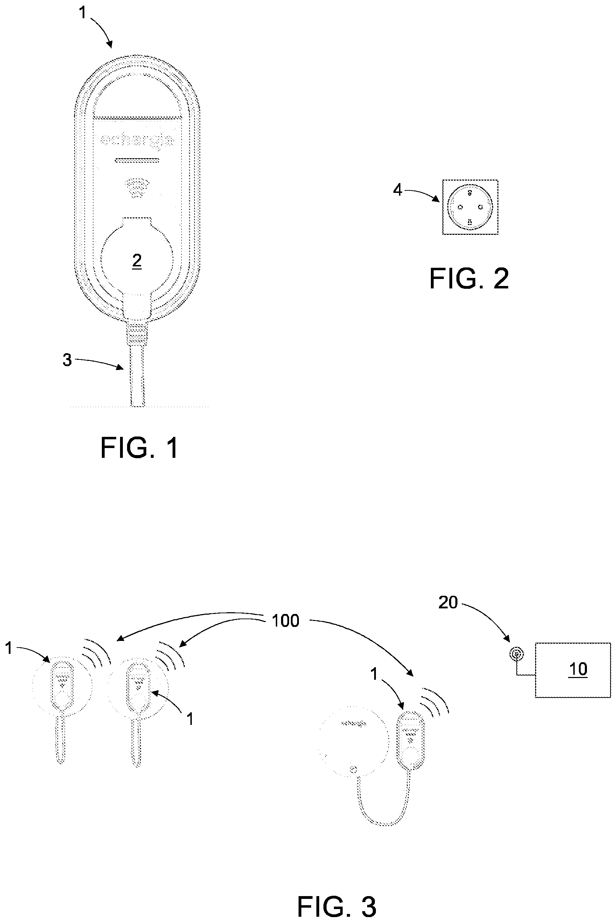

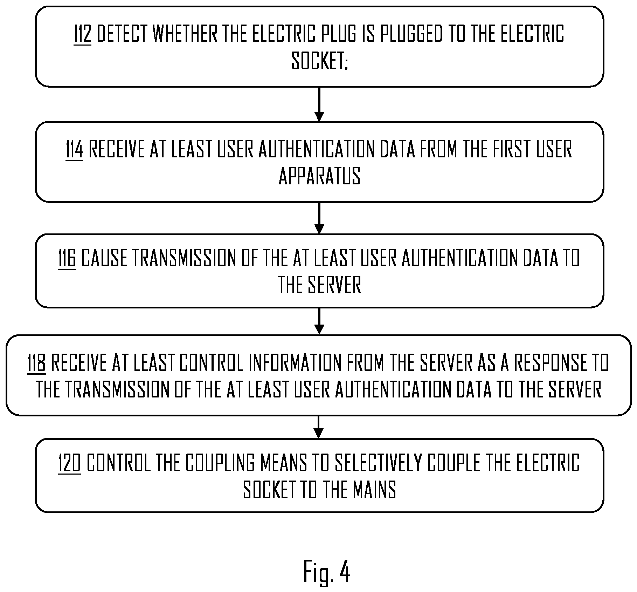

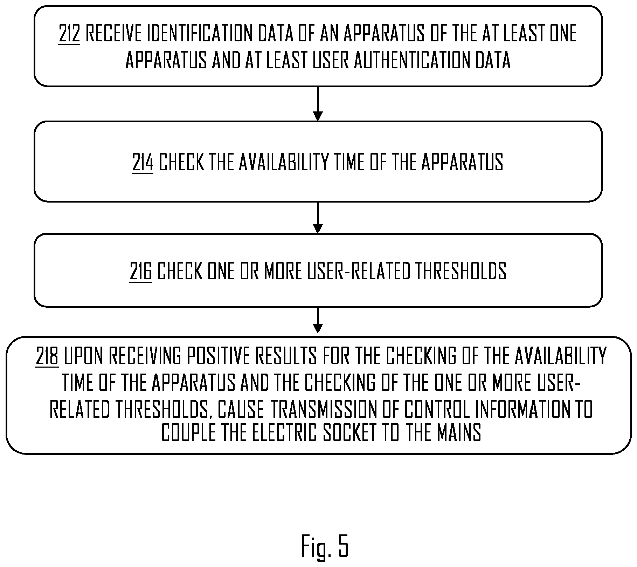

Figure 1 shows an apparatus 1 with a lid 2 and connecting cable 3 to the mains. Under the lid resides an electric socket 4 of which a European type electric socket 4 is depicted in Figure 2 as an example. The electric socket 4 may be any other type of electric socket, as well. Figure 3 depicts a system with three apparatuses 1 with communication means, or communication circuitry denoted by 100 and a server 10 with communication means, or communication circuitry denoted by 20. Figure 4 depicts method steps carried out in the apparatus 1 as a block diagram according to an embodiment and Figure 5 depicts method steps carried out in the server as a block diagram according to an embodiment.

The apparatus 1 is an accessory device that may be attached to a socket (e.g. wall socket, parking place socket or a similar power source that can be connected to mains). The apparatus 1 may therefore be used to control power feed or supply, and hence, for example, a user having access to the socket may sell electricity to other users or restrict users who can have access to the socket's power feed. The apparatus 1 comprises attachment element(s) that can be used to attach the apparatus 1 to the socket and may comprise a lock or locks that enable the apparatus 1 to be removed from the socket only by authorized personnel. Additionally, the apparatus 1 may comprise similar elements as the socket to which the apparatus 1 is connected so that the apparatus 1 can be used to provide electricity, in a controllable manner, to external devices, such as electric cars.

According to an embodiment, the user downloads a mobile application to his/her mobile phone, i.e. first user apparatus 300 or second user apparatus 400 (e.g. mobile phone or some other portable electronic device). After the user has input relevant information regarding the use of the mobile application, he/she may be able to see from a map view where one or more apparatuses 1 available for the user to acquire or rent are located. In the map view, a status of apparatuses registered to the system may be illustrated. The status may indicate a reservation status or an availability status of a respective apparatus 1. For example, some of the apparatuses 1 may indicate "OFF-time", "reserved" or "full", for example, meaning the user may not rent them at that moment. Further information reveals the opening hours regarding each apparatus 1 or possible estimated time when vacant or any other information relating the use of each apparatus 1. Some of the apparatuses 1 may indicate "OPEN-time" or "vacant", for example, meaning the user may rent at least one of them at that moment.

After the user has selected a parking place with the apparatus 1, he/she may navigate to the parking place. For renting the parking place equipped with the apparatus 1, he/she may be required to authenticate himself/herself to the system 1. Authentication may be carried out by the user apparatus with the mobile application by, for example, bringing the user apparatus to a proximity of the apparatus 1 with the mobile application open. The mobile application may transmit the relevant information to the apparatus 1, meaning the apparatus 1 receives 114 at least user authentication data from the user apparatus, in this case the first user apparatus 300. Authentication data relating to the user may be received by the first user apparatus 300 that may be any apparatus carrying authentication data wirelessly readable with it via any kind of wireless communication, such as near field communication (NFC), radio frequency identification (RF ID), infrared (IR) or the like, Bluetooth (BT), wireless local area network (WLAN) or the like and telecommunications network (2G and above).

After the apparatus 1 received the at least user authentication data, the apparatus 1 transmits 116 the received data to a server 10. Thus, the server 10 receives 212 the data, checks 214 the availability time of the apparatus, and possibly checks 216 one or more user-related thresholds regarding the user. The user-related threshold may be of any kind. One example of user-related threshold may be time. For example, the user may have obtained time resources usable for obtaining electricity from one or more apparatuses 1. If the user has time resources still available, the checking may be positive and thus the electric socket 4 may be connected to the mains at least for the time that the time resources indicate. Another example of user-related threshold may be right of use. Hence, in a way the user-related threshold may be understood as a user-related criterion or criterion which needs to be fulfilled to receive a positive checking result. Hence, for example, the checking may be positive if the user has right to use the certain apparatus 1. For example, only elderly people associated with certain right of use level may use apparatuses 1 which are located in certain area, whereas other users may use apparatuses 1 which are located in some other area. So, right to use may be apparatus 1 specific and/or group specific, for example. If the results for the one or more check are positive, the server transmits 218 at least control information to couple the electric socket to the mains, meaning the apparatus 1 receives 118 the at least control information from the server.

If the control information informs that the apparatus 1 may couple the electric socket 4 to the mains, the apparatus 1 may couple the electric socket 4 to the mains, otherwise the apparatus 1 may not couple the electric socket 4 to the mains. The apparatus 1 may inform the user that the user is authorized to park to the parking place and, as well, authorized to use electricity from the electric socket 4. The apparatus 1 may additionally query from the user whether the user wishes to couple the electric socket 4 to the mains. Additionally, the apparatus 1 may use detection means to detect 112 whether an electric plug is plugged to the electric socket 4. If the user need not use electricity, the apparatus 1 may not couple the electric socket 4 to the mains. If the user wishes to use electricity and still do not plug any plug to the electric socket 4, the apparatus may not couple the electric socket 4 to the mains. If a plug is plugged to the electric socket 4 after a predetermined time limit, the apparatus 1 may query authorization from the user to plug the electric socket 4 to the mains, thus, preventing use of electricity from any unauthorized users in time the authorized user uses the parking place.

If the checking means 214 and/or 216 result a negative result, the server 10 transmits 218 at least the control information to not to couple the electric socket 4 to the mains. In such a case, the apparatus 1 informs the user that the user has no authorization to use the electricity from the electric socket 4. The apparatus 1 may also inform the user whether the user is authorized to use the parking place. The apparatus 1 may also give any other information relevant to the case in question, such as opening hours or parking hours or information relating to the use of the electricity etc.

The server 10 may in any case transmit additional information regarding the coupling or the reason to not to couple the electric socket to the mains. The server 10 may, for example, inform that the parking is authorized but the electric socket 4 remains decoupled. After receiving the control information and optional other information regarding the results of the checking (214, 216), the apparatus 1 selectively couples 120 the electric socket 4 to the mains and additionally the apparatus 1, or the server 10, may transmit information regarding the results of the checkings (214, 216) and optionally other information to the second user apparatus 400.

The information regarding to which user apparatus (first user apparatus 300 or second user apparatus 400 or some other device) the additional information regarding to the renting of the parking place is transmitted, may vary depending on the situation. Firstly, it depends on the selections made from various alternatives. The selections may be saved in to the server 10, or the apparatus 1 or any other suitable location such as the second user apparatus 400, by the user when, for example, the user inputs the user data in time of registering to the service, via the mobile application for example, or updating the user data registered into the service.

Regarding selecting the user apparatus, which the additional information will be sent, it secondly depends on the user apparatus which the user uses to authenticate himself/herself to the apparatus 1 at a time. If the user authenticates with a mobile device or portable electronic device, the information may be transmitted to the device either via communication means 100 comprised in the apparatus 1 or communication means 20 comprised in the server 10. If the user authenticates with first user apparatus 300 being a credit card or some other user apparatus with any near field communications such as RF ID tag of NFC and without user interface for receiving additional information, the additional information need be transmitted to some other user apparatus, for example, the second user apparatus 400, preselected when registering the user data or associated with the credit card or the like.

According to an embodiment, the apparatus 1 detects that a vehicle arrived at the parking place associated with the apparatus 1 and the control unit 110 of the apparatus causes transmission to the server 10 a status information that the parking place is occupied. Detecting means detecting the vehicle may be of any known type, such as ultrasonic, mmWave radar ie. UWB RF sensing, Lidar, Time-of-Flight, photointerrupter, and/or magnetic to name a few examples. So, for example, one or more of said sensors may be comprised in the apparatus 1 and/or communicatively connected to the apparatus 1 for detecting the occupancy of the parking place and/or loading station. Respectively, when a vehicle leaves the parking place, the apparatus 1 may transmit to the server 10 a status information that the parking place is empty (i.e. unoccupied). The parking place status information may indicate whether or not the parking place is occupied or not. Based on the parking place status information received from a plurality of apparatuses 1 of the system, the server 10 may provide a map view of occupied/free charging stations.

According to an embodiment, the apparatus 1 detects whether or not there is a vehicle at the parking place associated with the apparatus 1. Consequently, if there is a vehicle at the parking place, the status information may be transmitted to the server 10.

Further, in an embodiment, the connecting to the mains may further depend on whether or there is a vehicle at the parking place (i.e. parking slot). If there is no vehicle, the coupling means may not connect the electric socket 4 to the mains. If there is a vehicle, the connecting may be performed according to the control information from the server 10. Further, it is possible that the server 10 determines whether or not there is a vehicle at the parking place and determines further based on the occupancy whether or not the socket 4 should be connected to the mains.

Providing the status information to the server enables the server 10 to provide a map view for the users (e.g. via user application usable with a user device, such as smart phone or the like) and/or have further information whether or not to control the apparatus 1 to connect the electric socket 4 to the mains. The status information and/or map view provide at least a technical benefit of reducing time to find a free electric socket for charging a vehicle. For example, the reduced time may mean decrease in wasted resources of the overall system (i.e. vehicles find the charging stations quicker and thus use less electricity for the searching). According to a further embodiment, after detecting the vehicle at the parking place associated with the apparatus 1, the apparatus 1 receives an identity information regarding the vehicle. If the identity information regarding the vehicle is associated with at least one user authentication data in the server and/or in the apparatus 1, the apparatus 1 may use the identity information regarding the vehicle instead of the user authentication data. Accordingly, the apparatus 1 may, in block 114 receive the identity information regarding the vehicle instead of, or in addition to the user authentication data. When the apparatus 1 stores a table mapping the identity information regarding the vehicle with the user authentication data, the apparatus 1 may retrieve the user authentication data corresponding the received identity information and proceed to block 116 and "cause transmission of the at least user authentication data to the server". In an unclaimed example, the apparatus 1 may request a verification from the user associated with the vehicle identity information. The verification may be requested in the mobile application or by text message if the user do not have the mobile application running, or both, or any other suitable way for receiving the verification from the user such as pressing a button in the apparatus 1 or taking the second user apparatus 400 associated with the vehicle identity information close to the apparatus 1 for a predetermined time, for example 3 seconds. The apparatus may inform in separate message or any other suitable way the positive verification such as sound or "no sound" or coloured light information where, for example, green light informs "verification accepted" and, for example, red light informs "verification missing".

According to further embodiment, the apparatus 1 may indicate using light of sound information whether the user of the apparatus or the parking place is authorized or not. According to the embodiment, the apparatus 1 may indicate to the server 10 and/or to the owner of the apparatus 1 and/or to the user of the apparatus 1 whether the use of the apparatus or the parking place is authorized.

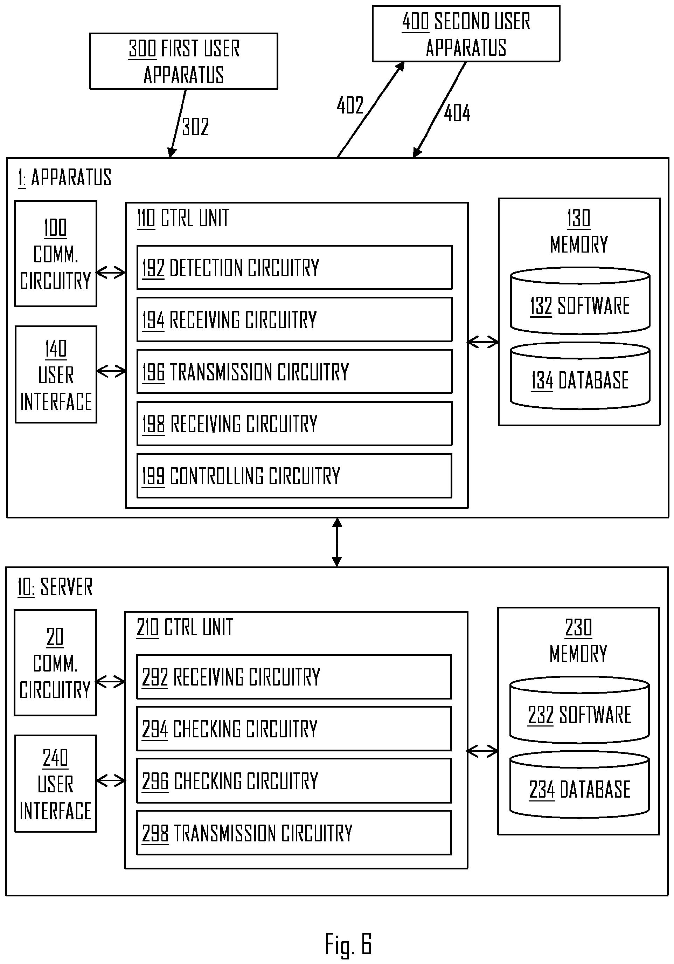

Figure 6 illustrates some embodiments. Referring to Figure 6, according to an embodiment, there is provided apparatus 1. The apparatus 1 comprises an electric socket 4 for receiving an electric plug and coupling means for selectively coupling the socket to the mains as described with respect to Figure 1. Further, the apparatus 1 comprises communication circuitry 100 for communicating at least with the first user apparatus 300, with the second user apparatus 400 and with the server 10. The communication circuitry 100 comprises hardware and/or software for realizing communication connectivity according to one or more communication protocols (e.g. wireless and/or wired). The communication circuitry 100 may comprise standard well-known components such as an amplifier, filter, frequency-converter, (de)modulator, and encoder/decoder circuitries and one or more antennas. Similarly, the server 10 may comprise same or similar communication circuitry 20 for realizing communication capabilities.

The apparatus 1 further comprises a control unit 110 configured to perform at least steps of Figure 4 or operations thereof. According to an embodiment, the control unit 110 comprises at least one processor, and the apparatus 1 comprises at least one memory 130 including a computer program code (software) 132, wherein the at least one memory and the computer program code (software) 132, are configured, with the at least one processor, to cause the respective apparatus 1 to carry out any one of the embodiments described above, or operations thereof.

According to an embodiment, the control unit 110 comprises a detection circuitry 192 configured at least to cause performing operations described with respect to block 112; a receiving circuitry 194 configured at least to cause performing operations described with respect to block 114; a transmission circuitry 196 configured at least to cause performing operations described with respect to block 116; a receiving circuitry 198 configured at least to cause performing operations described with respect to block 118; and a controlling circuitry 199 configured at least to cause performing operations described with respect to block 120.

As shown in Figure 6, there is provided server 10. The server 10 comprises communication circuitry 20 for communicating with at least one apparatus 1 comprising coupling means to selectively couple an electric socket to the mains (i.e. apparatus 1 or plurality of similar apparatuses). The server 10 may further comprise a control unit 210 control unit configured to perform embodiments described with reference to the Figures above (e.g. blocks 212- 218). According to an embodiment, the control unit 210 comprises at least one processor, and the server 10 comprises at least one memory 230 including a computer program code (software) 232, wherein the at least one memory and the computer program code (software) 232, are configured, with the at least one processor, to cause the server 10 to carry out any one of the embodiments described above, or operations thereof.

According to an embodiment, the control unit 210 comprises a receiving circuitry 292 configured at least to cause performing operations described with respect to block 212; a checking circuitry 294 configured at least to cause performing operations described with respect to block 214; a checking circuitry 296 configured at least to cause performing operations described with respect to block 216; and a transmission circuitry 298 configured at least to cause performing operations described with respect to block 218.

Referring still to Figure 6, the memory 130, 230 may be implemented using any suitable data storage technology, such as semiconductor based memory devices, flash memory, magnetic memory devices and systems, optical memory devices and systems, fixed memory and removable memory. The memory 130, 230 may comprise a database 134, 234 for storing data. For example, the user authentication data may be stored at least momentarily into said database 134, 234.

The apparatus 1 and/or server 10 may also comprise user interface 140, 240 comprising, for example, at least one keypad, a microphone, a touch display, a display, a speaker, etc. The user interface 140, 240 may be used to control the respective apparatus 1 or server 10 by a user of the apparatus 1 or the server 10.

According to an embodiment, there is provided a system comprising one or more apparatuses 1 in communication with the server 10. More than one server 10 may also be utilized, for example, for load balancing. This may make the systems even more flexible for different situation and use cases.

According to an embodiment, arrow 302 represents user authentication data transfer from a user apparatus 300 (i.e. first user apparatus) to the apparatus 1 as also explained in block 116. This may further be transferred to the server 10 by the apparatus 1. According to the present invention, a verification is requested, by the apparatus 1, before said data is transferred to the server 10 from the apparatus 1. Such a verification is illustrated with arrows 402 and 404: i.e. first verification request is transmitted to a second user apparatus 400 (arrow 402). Second, the user apparatus 400 may respond with verification or non-verification (arrow 404). In case the verification is positive, the apparatus 1 continues the process by transmitting the user authentication data to the server 10. In case the verification is negative (i.e. not accepting the verification or not verifying), the apparatus 1 may stop the process or prevent transmission of the user authentication data to the server 10. It is noted that negative verification may comprise explicit control signal from the apparatus 400 or implicit non-verification (e.g. no response or no positive verification received within certain time limit, hence response 404 may not necessarily be transmitted). The user of the user apparatus 400 may choose to accept or decline the verification request 402 (i.e. verify or not verify) by using user interface of the apparatus 400, for example.

The apparatuses 300 and 400 are different. For example, the apparatus 300 may be or comprise a NFC capable device, such as card or tag. For example, the apparatus 400 may be or comprise a portable electronic device, such as mobile phone.

It is noted that the communication circuitry 100 may support short range wireless technology or technologies, such as Near Field Communication (NFC) for transferring the user authentication data 302 from the apparatus 300 to the apparatus 1.

In an embodiment, the coupling means to decouple the electric socket 4 from the mains if electric load exceeds a threshold. The coupling means may further be configured not to couple the electric socket 4 to the mains at all if the electric load exceeds the threshold.

In an embodiment, the electric load refers to the load of the apparatus 1.

In an embodiment, the electric load refers to system load or total system electric load. Therefore, it may comprise the electric load of a network of apparatuses 1 (i.e. plurality of apparatuses). In such case, the apparatuses 1 may be configured to transmit load information to the server 10. Furthermore, the server 10 may indicate the overall system load to each apparatus 1 or simply indicate whether or not the coupling of the socket 4 to the mains is allowed. In the former case, the apparatus 1 may determine whether or not to couple or decouple the socket 4 with the mains and in the latter the decision may be made at the server 10.

In an embodiment, the server 10 prioritizes apparatuses which have started power output earlier. So, for example, if a first vehicle is at a first loading station and a second vehicle arrives later to a second loading station, the system prioritizes power feed to the first vehicle over the second vehicle. So, if total electric load of the system exceeds the threshold, the system (e.g. server 10) may decouple (or prevent coupling) socket 4 from the mains, said socket 4 being the socket of the second loading station.

According to the present invention, the apparatus 1 is removably fixable to a socket (e.g. wall socket or parking place socket). The removable fixability may be achieved using, for example, a lock and a quick release mechanism.

In an embodiment, the apparatus 300, 400 provides a user the ability to choose between charging mode and heating mode. The selecting can be made in a program or application provided, e.g. by the server, to the apparatus 300, 400. Same application or program can be used to provide the map view for the apparatus 300, 400.

In charging mode, the apparatus 1 is configured to provide higher output power than in the heating mode. Heating mode can be used to heat, for example, the motor and/or oil tank of the vehicle in question whereas the charging mode is configured to recharge the battery or batteries of the vehicle.

In an embodiment, the server 10 is configured to indicate end of charging or heating period via a notification from the program or application. It is possible to utilize some other message, such as Short Message Service (SMS) message. In any case, the user of the apparatus 300, 400 may be indicated that the charging or heating period is over, and the charging cable may be removed. For example, such notification may be sent if the battery is fully recharged or meets a user defined threshold (e.g. at least and/or over 50% or 80%).

In an embodiment, the application or program run on the apparatus 300, 400 indicates energy consumption. For example, energy consumption during the current charging or heating period may indicated. The data for the energy consumption indication may be sent from the apparatus 1 to the server 10, and from the server 10 to the apparatus 300, 400. So, in an embodiment, the apparatus 1 is further configured to measure consumed electricity and/or power.

As used in this application, the term 'circuitry' refers to all of the following: (a) hardware-only circuit implementations, such as implementations in only analog and/or digital circuitry, and (b) combinations of circuits and software (and/or firmware), such as (as applicable): (i) a combination of processor(s) or (ii) portions of processor(s)/software including digital signal processor(s), software, and memory(ies) that work together to cause an apparatus to perform various functions, and (c) circuits, such as a microprocessor(s) or a portion of a microprocessor(s), that require software or firmware for operation, even if the software or firmware is not physically present. This definition of 'circuitry' applies to all uses of this term in this application. As a further example, as used in this application, the term 'circuitry' would also cover an implementation of merely a processor (or multiple processors) or a portion of a processor and its (or their) accompanying software and/or firmware.

In an embodiment, at least some of the processes described in connection with Figures may be carried out by an apparatus comprising corresponding means for carrying out at least some of the described processes. Some example means for carrying out the processes may include at least one of the following: detector, processor (including dual-core and multiple-core processors), digital signal processor, controller, receiver, transmitter, encoder, decoder, memory, RAM, ROM, software, firmware, display, user interface, display circuitry, user interface circuitry, user interface software, display software, circuit, antenna, antenna circuitry, and circuitry. In an embodiment, the at least one processor, the memory, and the computer program code form processing means or comprises one or more computer program code portions for carrying out one or more operations according to any one of the embodiments of the Figures or operations thereof.

According to yet another embodiment, the apparatus carrying out the embodiments comprises a circuitry including at least one processor and at least one memory including computer program code. When activated, the circuitry causes the apparatus to perform at least some of the functionalities according to any one of the embodiments of the Figures, or operations thereof.

The techniques and methods described herein may be implemented by various means. For example, these techniques may be implemented in hardware (one or more devices), firmware (one or more devices), software (one or more modules), or combinations thereof. For a hardware implementation, the apparatus(es) of embodiments may be implemented within one or more application-specific integrated circuits (ASICs), digital signal processors (DSPs), digital signal processing devices (DSPDs), programmable logic devices (PLDs), field programmable gate arrays (FPGAs), processors, controllers, microcontrollers, microprocessors, other electronic units designed to perform the functions described herein, or a combination thereof. For firmware or software, the implementation can be carried out through modules of at least one chip set (e.g. procedures, functions, and so on) that perform the functions described herein. The software codes may be stored in a memory unit and executed by processors. The memory unit may be implemented within the processor or externally to the processor. In the latter case, it can be communicatively coupled to the processor via various means, as is known in the art. Additionally, the components of the systems described herein may be rearranged and/or complemented by additional components in order to facilitate the achievements of the various aspects, etc., described with regard thereto, and they are not limited to the precise configurations set forth in the given figures, as will be appreciated by one skilled in the art.

Processes as described may also be carried out in the form of a computer process defined by a computer program or portions thereof. Methods described in connection with the Figures may be carried out by executing at least one portion of a computer program comprising corresponding instructions. The computer program may be in source code form, object code form, or in some intermediate form, and it may be stored in some sort of carrier, which may be any entity or device capable of carrying the program. For example, the computer program may be stored on a computer program distribution medium readable by a computer or a processor. The computer program medium may be, for example but not limited to, a record medium, computer memory, read-only memory, electrical carrier signal, telecommunications signal, and software distribution package, for example. The computer program medium may be a non-transitory medium, for example. Coding of software for carrying out the embodiments as shown and described is well within the scope of a person of ordinary skill in the art. In an embodiment, a computer-readable medium comprises said computer program.

Even though the invention has been described above with reference to an example according to the accompanying drawings, it is clear that the invention is not restricted thereto but can be modified in several ways within the scope of the appended claims. Therefore, all words and expressions should be interpreted broadly and they are intended to illustrate, not to restrict, the embodiment. Further, it is clear to a person skilled in the art that the described embodiments may be combined with other embodiments in various ways within the scope of the appended claims.

## Claims

1. An apparatus (1) for a parking place, the apparatus (1) comprising:
an electric socket (4) for receiving an electric plug;
attachment elements for removably connecting the apparatus to another socket that can be connected to mains;
coupling means for selectively connecting the electric socket (4) to the another socket;
communication means (100) for communicating with a first user apparatus (300) and with a server (10); and
a control unit (110) configured to:
detect (112) whether the electric plug is plugged to the electric socket (4);
receive (114) at least user authentication data from the first user apparatus (300) through the communication means;
cause (116) transmission of the at least user authentication data to the server (10);
request a positive verification (402,404) from another user apparatus (400) before transmitting the user authentication data to the server (10);
receive (118) at least control information from the server (10) as a response to the transmission of the at least user authentication data to the server (10); and
control (120), based on the control information, the coupling means to selectively couple the electric socket (4) to the another socket;
wherein the apparatus (1) further comprises detecting means (122) for detecting whether a vehicle is parked to the parking place,
and in that the control unit (110) is further configured to:
cause transmitting parking place status information to the server (10).

2. The apparatus of claim 1, wherein the first user apparatus (300) is a credit card, any other identity card or tag adapted to wirelessly authenticate the user.

3. The apparatus of claim 1, wherein the first user apparatus (300) is a portable electronic device.

4. The apparatus of any preceding claim, wherein the detecting means for detecting whether the vehicle is parked into the parking place further comprises means for reading an identity information regarding the vehicle parked; and
the control unit (110) is configured to:
upon positive result of the detecting means to detect the identity information of the vehicle parked and the identity information regarding the vehicle parked is associated with the user authentication data, utilize the detected identity information of the vehicle parked instead of the user authentication data.

5. The apparatus of any preceding claim, wherein the control unit (110) is configured to:
decouple the electric socket (4) from the mains or prevent coupling the electric socket (4) to the mains if electric load exceeds a threshold.

6. The apparatus of claim 5, wherein the electric load is system electric load.

7. The apparatus of claim 6, wherein information about the system electric load is received from the server (10).

8. The apparatus of claim 5, 6, or 7, wherein the decoupling is performed based on a request message from the server (10).

9. A system comprising at least one apparatus (1) according to any one of claims 1-8 and at least one server (10) comprising:
communication means (20) for communicating with the apparatus of any one of claims 1-8;
control unit (210) configured to:
receive (212) identification data of the at least one apparatus (1) and at least user authentication data;
check (214) the availability time of the at least one apparatus (1);
upon receiving positive results for the checking of the availability time of the at least one apparatus (1), cause transmission of control information to the at least one apparatus (1) to couple the electric socket to the another socket,
wherein the server (10) is further configured to receive parking place status information from the apparatus (1), and in that the server (10) is configured to provide a map view, based at least on the parking place status information, to a portable electronic device (300, 400), wherein the map view indicates status of the at least one apparatus (1).

10. The system of claim 9, further comprising:
the portable electric device (300, 400).

## Patentansprüche

1. Einrichtung (1) für einen Parkplatz, wobei die Einrichtung (1) Folgendes umfasst:
eine elektrische Steckdose (4) zum Aufnehmen eines elektrischen Steckers;
Befestigungselemente zum entfernbaren Verbinden der Einrichtung mit einer anderen Steckdose, die mit dem Netz verbunden werden kann;
Kopplungsmittel zum selektiven Verbinden der elektrischen Steckdose (4) mit der anderen Steckdose;
Kommunikationsmittel (100) zum Kommunizieren mit einer ersten Benutzereinrichtung (300) und mit einem Server (10); und
eine Steuereinheit (110), die zu Folgendem ausgelegt ist:
Detektieren (112), ob der elektrische Stecker in die elektrische Steckdose (4) gesteckt ist;
Empfangen (114) mindestens von Benutzerauthentifizierungsdaten über die Kommunikationsmittel von der ersten Benutzereinrichtung (300);
Veranlassen (116) einer Übertragung mindestens der Benutzerauthentifizierungsdaten zum Server (10);
Anfordern einer positiven Verifizierung (402, 404) von einer anderen Benutzereinrichtung (400) vor dem Übertragen der Benutzerauthentifizierungsdaten zum Server (10);
Empfangen (118) mindestens von Steuerinformationen vom Server (10) als eine Reaktion auf die Übertragung mindestens der Benutzerauthentifizierungsdaten zum Server (10); und
Steuern (120) der Kopplungsmittel zum selektiven Koppeln der elektrischen Steckdose (4) auf Basis der Steuerinformationen an die andere Steckdose;
wobei die Einrichtung (1) ferner zum Detektieren, ob auf dem Parkplatz ein Fahrzeug geparkt ist, Detektionsmittel (122) umfasst,
und dadurch, dass die Steuereinheit (110) ferner zu Folgendem ausgelegt ist:
Veranlassen des Übertragens von Parkplatzstatusinformationen zum Server (10).

2. Einrichtung nach Anspruch 1, wobei die erste Benutzereinrichtung (300) eine Kreditkarte, eine andere Identitätskarte oder ein Tag ist, das zum drahtlosen Authentifizieren des Benutzers angepasst ist.

3. Einrichtung nach Anspruch 1, wobei die erste Benutzereinrichtung (300) eine tragbare elektronische Vorrichtung ist.

4. Einrichtung nach einem der vorhergehenden Ansprüche, wobei die Detektionsmittel zum Detektieren, ob das Fahrzeug auf dem Parkplatz geparkt ist, ferner Mittel zum Lesen von Identitätsinformationen über das geparkte Fahrzeug umfasst; und
die Steuereinheit (110) ist zu Folgendem ausgelegt:
nach einem positiven Ergebnis der Detektionsmittel beim Detektieren der Identitätsinformationen des geparkten Fahrzeugs und wenn die Identitätsinformationen über das geparkte Fahrzeug mit den Benutzerauthentifizierungsdaten verknüpft sind, Verwenden der detektierten Identitätsinformationen des geparkten Fahrzeugs anstelle der Benutzerauthentifizierungsdaten.

5. Einrichtung nach einem der vorhergehenden Ansprüche, wobei die Steuereinheit (110) zu Folgendem ausgelegt ist:
Entkoppeln der elektrischen Steckdose (4) vom Netz oder Verhindern des Koppelns der elektrischen Steckdose (4) an das Netz, wenn eine elektrische Last einen Schwellwert überschreitet.

6. Einrichtung nach Anspruch 5, wobei die elektrische Last eine elektrische Systemlast ist.

7. Einrichtung nach Anspruch 6, wobei Informationen über die elektrische Systemlast vom Server (10) empfangen werden.

8. Einrichtung nach Anspruch 5, 6 oder 7, wobei das Entkoppeln auf Basis einer Anforderungsnachricht vom Server (10) durchgeführt wird.

9. System, das mindestens eine Einrichtung (1) gemäß einem der Ansprüche 1 bis 8 und mindestens einen Server (10) sowie Folgendes umfasst:
Kommunikationsmittel (20) zum Kommunizieren mit der Einrichtung nach einem der Ansprüche 1 bis 8;
eine Steuereinheit (210), die zu Folgendem ausgelegt ist:
Empfangen (212) von Identifikationsdaten der mindestens einen Einrichtung (1) und mindestens Benutzerauthentifizierungsdaten;
Prüfen (214) der Verfügbarkeitszeit der mindestens einen Einrichtung (1);
nach Empfangen von positiven Ergebnissen beim Prüfen der Verfügbarkeitszeit der mindestens einen Einrichtung (1) Veranlassen einer Übertragung von Steuerinformationen zu der mindestens einen Einrichtung (1), um die elektrische Steckdose an die andere Steckdose zu koppeln,
wobei der Server (10) ferner dazu ausgelegt ist, Parkplatzstatusinformationen von der Einrichtung (1) zu empfangen, und dadurch, dass der Server (10) dazu ausgelegt ist, einer tragbaren elektronischen Vorrichtung (300, 400) mindestens auf Basis der Parkplatzstatusinformationen eine Kartenansicht bereitzustellen, wobei die Kartenansicht einen Status der mindestens einen Einrichtung (1) anzeigt.

10. System nach Anspruch 9, das ferner Folgendes umfasst: die tragbare elektronische Vorrichtung (300, 400).

## Revendications

1. Appareil (1) pour une place de stationnement, l'appareil (1) comprenant :
une prise électrique (4) pour recevoir une fiche électrique ;
des éléments de fixation pour connecter de manière amovible l'appareil à une autre prise qui peut être connectée au réseau électrique ;
des moyens de couplage pour connecter sélectivement la prise électrique (4) à une autre prise ;
des moyens de communication (100) pour communiquer avec un premier appareil utilisateur (300) et avec un serveur (10) ; et
une unité de commande (110) configurée pour :
détecter (112) si la fiche électrique est branchée sur la prise électrique (4) ;
recevoir (114) au moins des données d'authentification d'utilisateur du premier appareil utilisateur (300) par l'intermédiaire des moyens de communication ;
provoquer (116) la transmission desdites au moins des données d'authentification d'utilisateur au serveur (10) ;
demander une vérification positive (402,404) à un autre appareil utilisateur (400) avant de transmettre les données d'authentification d'utilisateur au serveur (10) ;
recevoir (118) au moins des informations de commande du serveur (10) en réponse à la transmission desdites au moins des données d'authentification d'utilisateur au serveur (10) ; et
commander (120), sur la base des informations de commande, les moyens de couplage pour coupler sélectivement la prise électrique (4) à une autre prise ;
dans lequel l'appareil (1) comprend en outre des moyens de détection (122) pour détecter si un véhicule est stationné sur la place de stationnement,
et en ce que l'unité de commande (110) est en outre configurée pour :
provoquer la transmission d'informations de statut de place de stationnement au serveur (10).

2. Appareil de la revendication 1, dans lequel le premier appareil utilisateur (300) est une carte de crédit, toute autre carte d'identité ou étiquette adaptée à l'authentification sans fil de l'utilisateur.

3. Appareil de la revendication 1, dans lequel le premier appareil utilisateur (300) est un dispositif électronique portable.

4. Appareil de l'une des revendications précédentes, dans lequel les moyens de détection pour détecter si le véhicule est stationné sur la place de stationnement comprennent en outre des moyens pour lire des informations d'identité concernant le véhicule stationné ; et
l'unité de commande (110) est configurée pour :
en cas de résultat positif des moyens de détection pour détecter les informations d'identité du véhicule stationné et les informations d'identité concernant le véhicule stationné qui sont associées aux données d'authentification d'utilisateur, utiliser les informations d'identité détectées du véhicule stationné au lieu des données d'authentification d'utilisateur.

5. Appareil de l'une des revendications précédentes, dans lequel l'unité de commande (110) est configurée pour :
découpler la prise électrique (4) du réseau électrique ou empêcher le couplage de la prise électrique (4) au réseau électrique si la charge électrique dépasse un seuil.

6. Appareil de la revendication 5, dans lequel la charge électrique est une charge électrique système.

7. Appareil de la revendication 6, dans lequel des informations sur le système charge électrique sont reçues du serveur (10).

8. Appareil de la revendication 5, 6, ou 7, dans lequel le découplage est réalisé sur la base d'un message de demande provenant du serveur (10).

9. Système comprenant au moins un appareil (1) selon l'une quelconque des revendications 1 à 8 et au moins un serveur (10) comprenant :
des moyens de communication (20) pour communiquer avec l'appareil de l'une quelconque des revendications 1 à 8 ;
une unité de commande (210) configurée pour :
recevoir (212) des données d'identification de l'au moins un appareil (1) et au moins des données d'authentification d'utilisateur ;
vérifier (214) le temps de disponibilité de l'au moins un appareil (1) ;
à la réception de résultats positifs de la vérification du temps de disponibilité de l'au moins un appareil (1), provoquer la transmission d'informations de commande à l'au moins un appareil (1) pour coupler la prise électrique à une autre prise,
dans lequel le serveur (10) est en outre configuré pour recevoir des informations de statut de place de stationnement de l'appareil (1), et en ce que le serveur (10) est configuré pour fournir à un dispositif électronique portable (300, 400) une vue cartographique basée au moins sur les informations de statut de place de stationnement, dans lequel la vue cartographique indique un statut de l'au moins un appareil (1).

10. Système de la revendication 9, comprenant en outre : le dispositif électrique portable (300, 400).
